# DEMANDE DE BREVET EUROPEEN

(11) **EP 4 117 160 A1**
(43) Date de publication de la demande: **11.01.2023**
(21) Numéro de dépôt: 22183435.1
(22) Date de dépôt: 06.07.2022
(51) Int. Cl.: H02M 3/158, H02M 1/00

(54) **CONVERTISSEUR DE TENSION DC/DC PERMETTANT LE PRÉCHAUFFAGE D'UN POT CATALYTIQUE ET VÉHICULE AUTOMOBILE COMPORTANT UN TEL CONVERTISSEUR DE TENSION DC/DC**

(30) Priorité: 06.07.2021 FR 2107320
(71) Demandeur: Valeo Systèmes de Contrôle Moteur, 95892 Cergy-Pontoise (FR)
(72) Inventeur: ALLALI, Nicolas, 95892 CERGY PONTOISE (FR); TALON, Emmanuel, 95892 CERGY PONTOISE (FR)
(74) Mandataire: Valeo Powertrain Systems

(57) **Abrégé**

L'invention concerne un système électrique (100) comprenant un convertisseur de tension DC/DC (106) comportant N modules de conversion de tension comprenant chacun une cellule de conversion de tension (108₁₋₃) connectée à une borne de masse (B_{M}), de haute tension (B_{HT}) et à un point milieu (PM₁₋₃) et un dispositif de sécurité (126₁₋₃) connecté au point milieu et à une première borne de basse tension (B_{BT1}), au plus N-1 modules de conversion de tension comprennent en outre chacun un interrupteur de sélection (TS1, TS2) connecté entre le point milieu et une deuxième borne de basse tension (B_{BT2}) et un dispositif de commande conçu pour dans un premier mode de fonctionnement ouvrir tous les interrupteurs de sélection afin de réaliser une conversion entre la tension présente au niveau de la borne de haute tension et celle présente au niveau de la première borne de basse tension et pour dans un deuxième mode de fonctionnement, fermer tous les interrupteurs de sélection afin de réaliser une conversion entre la tension présente au niveau de la borne de haute tension et celle présente au niveau de la deuxième borne de basse tension, et une résistance de chauffage (R_{PCA}) d'un pot catalytique connectée à la deuxième borne de basse tension et destinée à être connectée à une masse électrique (M).

## Description

La présente invention concerne un convertisseur de tension DC/DC embarqué sur un véhicule automobile, configuré pour réaliser une fonction supplémentaire de préchauffage d'un pot catalytique ainsi qu'un véhicule automobile comprenant un tel convertisseur de tension DC/DC.

L'invention concerne également un procédé de préchauffage d'un pot catalytique au moyen d'un tel système électrique.

De manière connue, de nombreux véhicules automobiles sont équipés d'un convertisseur de tension DC/DC (de l'anglais « Direct Current/Direct Current ») configuré pour convertir une tension d'entrée, par exemple de 48 V, en une première tension de sortie par exemple en 12 V. Le convertisseur de tension DC/DC est par exemple utilisé pour alimenter une batterie par exemple de 12V à charger ou encore pour alimenter un équipement électrique, tel qu'un autoradio.

Par ailleurs, ces véhicules automobiles peuvent, également de manière connue, être équipés d'un système de préchauffage permettant de préchauffer un pot catalytique lors d'un démarrage à froid. Ce système de préchauffage comprend classiquement une électronique destinée à fournir une tension d'alimentation à une résistance de chauffage du pot catalytique.

Dans ces véhicules automobiles connus, les fonctions de convertisseur de tension DC/DC et de préchauffage du pot catalytique sont effectuées par deux modules électroniques distincts.

Une telle solution est couteuse et possède un encombrement total important.

L'invention a pour but de pallier au moins en partie les problèmes précités.

À cet effet, il est proposé, selon un premier aspect de l'invention, un convertisseur de tension DC/DC comportant :
- une borne de masse destiné à être connecté à une masse électrique (M) ;
- une borne de haute tension destiné à présenter une haute tension par rapport à la masse électrique ;
- une première borne de basse tension destiné à présenter une première basse tension par rapport à la masse électrique ;
- une deuxième borne de basse tension destiné à présenter une deuxième basse tension par rapport à la masse électrique,
- un nombre N supérieur ou égal à 2 de modules de conversion de tension, connectés en parallèle entre la borne de haute tension et la première borne de basse tension, chacun des modules de conversion comprenant une cellule de conversion de tension connectée électriquement aux bornes de masse, de haute tension et à un point milieu et un dispositif de sécurité (126₁, 126₂, 126₃) connecté électriquement au point milieu et à la première borne de basse tension ;
caractérisé en ce qu'au plus N-1 modules de conversion de tension comprennent en outre chacun un interrupteur de sélection connecté électriquement entre le point milieu du module de conversion de tension et la deuxième borne de basse tension et en ce que le convertisseur de tension DC/DC comprend en outre un dispositif de commande conçu pour dans un premier mode de fonctionnement ouvrir tous les interrupteur de sélection desdits au plus N-1 module de conversion de tension afin de réalisé une conversion entre la haute tension et la première basse tension et pour dans un deuxième mode de fonctionnement, fermer tous les interrupteur de sélection desdits au plus N-1 module de conversion de tension afin de réaliser une conversion entre la haute tension et la deuxième basse tension.

Le convertisseur de tension DC/DC selon le premier aspect de l'invention peut selon le premier mode de fonctionnement assurer les fonctions d'un convertisseur de tension DC/DC selon l'art antérieur et selon un deuxième mode de fonctionnement assurer la fonction d'un système de préchauffage d'un pot catalytique selon l'art antérieur.

Ainsi, on combine en un seul module électronique des fonctions électroniques qui étaient de manière connue effectuées par des modules distincts, ce qui permet de réduire l'encombrement total ainsi que les coûts de production des modules réalisant ces fonctions.

En outre, le refroidissement et le circuit de contrôle des interrupteurs peuvent être mutualisés, de sorte que l'encombrement total ainsi que les coûts de production peuvent en être encore améliorés.

Un convertisseur de tension DC/DC selon l'invention peut en outre comporter une ou plusieurs des caractéristiques optionnelles suivantes, prises isolément ou bien selon n'importe quelle combinaison techniquement possible.

De façon optionnelle, la deuxième borne de basse tension est destinée à être connectée à une résistance de chauffage d'un pot catalytique.

De façon optionnelle, la deuxième basse tension est plus grande, par exemple au moins deux fois, de préférence au moins trois fois plus grande que la première basse tension.

Ainsi, a puissance égale le rendement des N-1 modules de conversion utilisés pour réaliser la conversion entre la haute tension et la deuxième basse tension est plus élevé.

De façon optionnelle, dans le deuxième mode de fonctionnement, le dispositif de sécurité de chacun desdits au plus N-1 modules de conversion de tension déconnecte électriquement la première borne de basse tension du point milieu du module de conversion comprenant ce dispositif de sécurité.

De façon optionnelle, dans le premier mode de fonctionnement, le dispositif de sécurité de chacun des N modules de conversion de tension connecte électriquement la première borne de basse tension au point milieu du module de conversion comprenant ce dispositif de sécurité.

De façon optionnelle, chaque cellule de conversion de tension comporte un bras de commutation comportant un interrupteur de côté haut et un interrupteur de côté bas connectés l'un à l'autre en un point central, le bras de commutation étant connecté entre la borne de haute tension et la borne de masse, tandis que le point central est connecté au point milieu, par exemple par l'intermédiaire d'une inductance.

De façon optionnelle, les interrupteurs de sélection sont des transistors MOSFET (transistor à effet de champ à grille isolée de l'anglais « Metal Oxide Semiconductor Field Effect Transistor »), par exemple en silicium (Si-MOSFET) ou en carbure de silicium (SiC-MOSFET), ou des transistors FET (transistor à effet de champ= de l'anglais « Field Effect Transistor »), en nitrure de gallium ou des transistors IGBT (transistor bipolaire à grille isolée de l'anglais « Insulated Gate Bipolar Transistor »).

De façon optionnelle, les interrupteurs de côté haut 202 et de côté bas 204 sont des transistors MOSFET, par exemple en silicium (Si-MOSFET) ou en carbure de silicium (SiC-MOSFET), ou des transistors FET en nitrure de gallium ou des transistors IGBT.

De façon optionnelle, le dispositif de sécurité de chacun desdits N modules de conversion de tension comprend au moins un interrupteur d'isolement apte à connecter ou déconnecter la première borne de basse tension du point milieu du module de conversion comprenant cet interrupteur d'isolement.

De façon optionnelle, le dispositif de sécurité de chacun des N modules de conversion de tension comprend au moins deux interrupteurs d'isolement montés en série et en opposition l'un par rapport à l'autre et apte à connecter ou déconnecter la première borne de basse tension du point milieu du module de conversion comprenant ces deux interrupteurs d'isolement.

De façon optionnelle, dans le premier mode de fonctionnement, le ou les interrupteurs d'isolement de chaque dispositif de sécurité de chacun des N modules de conversion de tension connecte électriquement la première borne de basse tension au point milieu du module de conversion comprenant ce ou ces transistors d'isolement.

De façon optionnelle, dans le deuxième mode de fonctionnement, le ou les interrupteurs d'isolement de chacun desdits au plus N-1 modules de conversion de tension déconnecte électriquement la première borne de basse tension du point milieu du module de conversion comprenant ce ou ces transistors d'isolement.

De façon optionnelle, les interrupteurs d'isolement sont des transistors MOSFET, par exemple en silicium (Si-MOSFET) ou en carbure de silicium (SiC-MOSFET), ou des transistors FET en nitrure de gallium ou des transistors IGBT.

De façon optionnelle, le convertisseur de tension DC/DC comprend en outre une capacité connectée entre la borne de masse et la deuxième borne de basse tension.

Il est également proposé, selon un deuxième aspect de l'invention, un système électrique comprenant un convertisseur de tension DC/DC selon le premier aspect de l'invention et une résistance de chauffage d'un pot catalytique, la résistance de chauffage étant connectée par l'une de ses bornes à la deuxième borne de basse tension et étant destinée à être connectée par l'autre de ses bornes à la masse électrique.

De façon optionnelle, le système électrique comprend en outre ledit pot catalytique.

De façon optionnelle, ledit pot catalytique comprend ladite résistance de chauffage.

De façon optionnelle, le système électrique comprend en outre une capacité connectée par l'une de ses bornes à la deuxième borne de basse tension et destinée à être connectée par l'autre de ses bornes à la masse électrique.

De façon optionnelle, le système électrique comprend en outre une source de tension continue, par exemple une batterie conçue pour fournir une tension haute HT, ladite borne de haute tension étant connectée au potentiel haut de ladite source de tension continue.

De façon optionnelle, le système électrique comprend en outre une masse électrique, la borne de masse étant connectée à ladite masse et la résistance de chauffage étant connectée par l'autre de ses bornes à ladite masse électrique.

De façon optionnelle, le système électrique comprend une charge, ladite charge étant connectée électriquement entre ladite masse et ladite premier borne de basse tension.

Il est également proposé, selon un troisième aspect de l'invention, un véhicule automobile comportant un convertisseur de tension DC/DC selon le premier aspect de l'invention ou un système électrique selon le deuxième aspect de l'invention.

Il est également proposé selon un quatrième aspect de l'invention, un procédé de préchauffage d'un pot catalytique au moyen d'un système électrique selon le deuxième aspect de l'invention, le système électrique comprenant :
- une masse électrique ;
- un convertisseur de tension DC/DC comprenant :
   - une borne de masse connectée à la masse électrique ;
   - une borne de haute tension destiné à présenter une haute tension par rapport à la masse électrique ;
   - une première borne de basse tension destiné à présenter une première basse tension par rapport à la masse électrique ;
   - une deuxième borne de basse tension destiné à présenter une deuxième basse tension par rapport à la masse électrique ;
   - un nombre N supérieur ou égal à 2 de modules de conversion de tension, connectés en parallèle entre la borne de haute tension et la première borne de basse tension, chacun des modules de conversion comprenant une cellule de conversion de tension connectée électriquement aux bornes de masse, de haute tension et à un point milieu et un dispositif de sécurité connecté électriquement au point milieu et à la première borne de basse tension ;
   - au plus N-1 modules de conversion de tension comprennent en outre chacun un interrupteur de sélection connecté électriquement entre le point milieu du module de conversion de tension et la deuxième borne de basse tension et
   - un dispositif de commande conçu pour dans un premier mode de fonctionnement ouvrir tous les interrupteurs de sélection desdits au plus N-1 module de conversion de tension afin de réaliser une conversion entre la haute tension et la première basse tension et pour dans un deuxième mode de fonctionnement, fermer tous les interrupteurs de sélection desdits au plus N-1 module de conversion de tension afin de réaliser une conversion entre la haute tension et la deuxième basse tension, et
- une résistance de chauffage dudit pot catalytique, ladite résistance de chauffage étant connectée par l'une de ses bornes à la deuxième borne de basse tension et étant connectée par l'autre de ses bornes à ladite masse électrique,
ledit procédé étant caractérisé en ce qu'il comprend une étape de préchauffage dans laquelle le dispositif de commande ferme, dans son deuxième mode de fonctionnement, tous les interrupteurs de sélection desdits au plus N-1 module de conversion de tension pour alimenter la résistance de chauffage par ladite deuxième basse tension afin de préchauffer ledit pot catalytique.

De façon optionnelle, lors de l'étape de préchauffage le dispositif de sécurité de chacun desdits au plus N-1 modules de conversion de tension déconnecte électriquement la première borne de basse tension du point milieu du module de conversion comprenant ce dispositif de sécurité.

De façon optionnelle, l'étape de préchauffage est réalisée lorsque le convertisseur de tension DC/DC est dans le deuxième mode de fonctionnement.

L'invention sera mieux comprise à l'aide de la description qui va suivre, donnée uniquement à titre d'exemple et faite en se référant aux dessins annexés dans lesquels :
La [Fig. 1] est un schéma fonctionnel électrique d'un exemple de convertisseur de tension DC/DC selon l'invention,
La [Fig. 2] est un circuit électrique illustrant un mode de réalisation d'une cellule de conversion de tension du convertisseur de tension DC/DC de la figure 1, et
La [Fig. 3] est un circuit électrique illustrant un mode de réalisation d'un dispositif de sécurité du convertisseur de tension DC/DC de la figure 1.

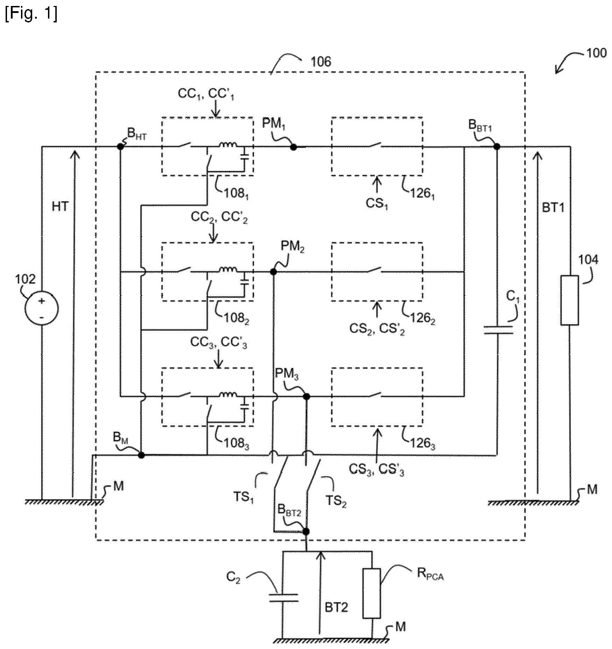

En référence à la figure 1, un système électrique 100 destiné à équiper par exemple un véhicule automobile va à présent être décrit.

Le système 100 comporte tout d'abord une masse électrique M, une source de tension continue 102 (telle qu'une batterie) conçue pour fournir une tension haute HT (par exemple 48 V) par rapport à la masse électrique M, une charge 104 apte à être alimentée électriquement par une première basse tension BT1 (par exemple 12 V) par rapport à la masse électrique M, une capacité C₂ montée en parallèle avec une résistance de chauffage R_{PCA} d'un pot catalytique apte à être alimentée par une deuxième basse tension BT2 (par exemple 36V).

De manière générale, la tension haute HT est supérieure à la première basse tension BT1 et à la deuxième basse tension BT2. En outre, la deuxième basse tension BT2 est supérieure à la première basse tension BT1.

Afin d'obtenir la première basse tension BT1 et la deuxième basse tension BT2 à partir de la haute tension HT, le système 100 comporte en outre un convertisseur de tension DC/DC 106.

Le convertisseur de tension DC/DC 106 comporte tout d'abord une borne de masse B_{M} connectée à la masse électrique M, une borne de haute tension B_{HT} connectée à la source de tension continue 102 afin de présenter la haute tension HT par rapport à la masse électrique M, une première borne de basse tension B_{BT1} connecté à la charge 104 afin de présenter la première basse tension BT1 par rapport à la masse électrique M, et une deuxième borne de basse tension B_{BT2} afin de présenter la deuxième basse tension BT2 par rapport à la masse électrique M.

La deuxième borne de basse tension B_{BT2} est connectée à la résistance de chauffage R_{PCA} du pot catalytique et à la capacité C₂.

Ainsi, la capacité C₂ et la résistance de chauffage R_{PCA} sont connectées entre la masse électrique M et la deuxième borne de basse tension B_{BT2}.

Le convertisseur de tension DC/DC comporte en outre une résistance C₁ connectée entre la masse électrique M et la première borne de basse tension B_{BT1}.

Le convertisseur de tension DC/DC 106 comporte en outre au moins un nombre N supérieur ou égal à 2 de modules de conversion de tension connectés en parallèle entre la borne de haute tension B_{HT} et la première borne de basse tension B_{BT1} pour réaliser une conversion entre la haute tension HT et la première basse tension BT1.

Dans l'exemple décrit, le nombre N est égal à trois, i.e. le convertisseur de tension DC/DC 106 comprend trois modules de conversion de tension connectés en parallèle.

Chacun de ces 3 modules de conversion comprend une cellule de conversion 108₁₋₃ de tension connectée électriquement à la borne de masse B_{M}, à la borne de haute tension B_{HT} et à un point milieu PM₁₋₃ et un dispositif de sécurité 126₁₋₃ connecté électriquement au point milieu PM₁₋₃ et à la première borne de basse tension B_{BT1}.

En outre, au plus N-1 modules de conversion de tension comprennent chacun également un interrupteur de sélection connecté électriquement entre le point milieu du module de conversion de tension et la deuxième borne de basse tension B_{BT2}.

Dans l'exemple décrit, deux modules de conversion de tension comprennent un interrupteur de sélection.

Ainsi un interrupteur de sélection TS1 est connecté électriquement entre le point milieu PM₂ et la deuxième borne de basse tension B_{BT2} et un interrupteur de sélection TS2 est connecté électriquement entre le point milieu PM₃ et la deuxième borne de basse tension B_{BT2}.

Les interrupteurs de sélection TS1 et TS2 sont dans l'exemple décrit des transistors de type MOSFET en silicium (Si-MOSFET) ou en carbure de silicium (SiC-MOSFET). Par exemple, ces transistors MOSFET sont des transistors de type N dont la source est connectée électriquement à la deuxième borne de basse tension B_{BT2}. Dans cet exemple, le drain du transistor MOSFET TS1, respectivement du transistor MOSFET TS2, est en outre connecté au point milieu PM₂, respectivement PM₃.

Dans l'exemple décrit, chaque cellule 108₁₋₃ est une cellule à commutation.

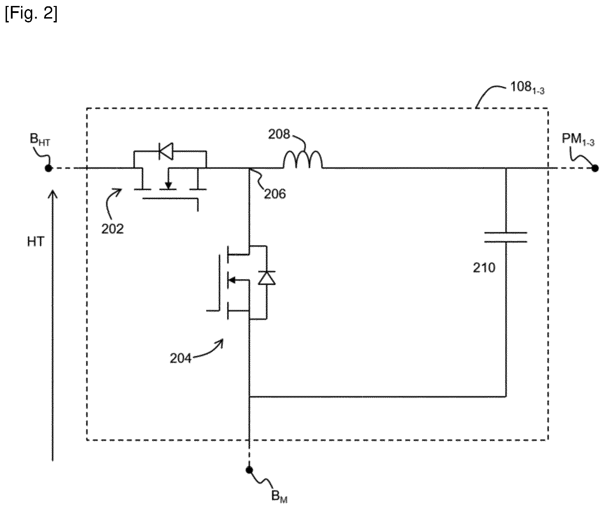

En référence à la figure 2, nous allons maintenant décrire ces cellules.

Chaque cellule 108₁₋₃ comporte par exemple un bras de commutation comportant un interrupteur de côté haut 202 et un interrupteur de côté bas 204 connectés l'un à l'autre en un point central 206. Le bras de commutation est connecté électriquement entre la borne de haute tension B_{HT} et la borne de masse B_{M} pour recevoir la haute tension HT.

Les interrupteurs 202, 204 sont par exemple des interrupteurs à transistor tels que des transistors MOSFET en silicium (Si-MOSFET) ou en carbure de silicium (SiC-MOSFET).

Dans l'exemple décrit ici, le transistor 202 est de type N, sa source est connectée électriquement au point central 206 et son drain à la borne de haute tension B_{HT}.

Dans l'exemple décrit ici, le transistor 204 est de type N, sa source est connectée électriquement à la borne de masse B_{M} et son drain est connectée électriquement au point central 206.

Chaque cellule 108₁₋₃ comporte en outre une inductance 208 connectant électriquement le point central 206 au point milieu PM₁₋₃ et une capacité 210 connectant le point milieu PM₁₋₃ à la masse électrique M, par exemple directement ou bien, comme illustré, en étant connectée à la borne de masse B_{M}. En variante, les cellules 108₁₋₃ ne comporte pas de capacité 210.

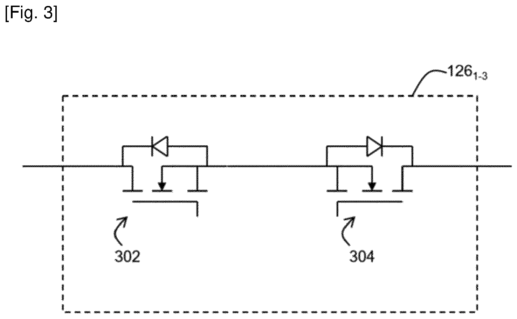

En référence à la figure 3, nous allons maintenant décrire un dispositif de sécurité.

Chaque dispositif de sécurité 126₁₋₃ comporte par exemple deux interrupteurs d'isolement à transistor 302, 304 montés en série et en opposition l'un par rapport à l'autre. Ainsi, lorsqu'ils sont ouverts tous les deux, le dispositif de sécurité 126₁₋₃ est dit ouvert et le passage de courant est empêché dans les deux sens d'écoulement. En particulier, le passage de courant par la diode inverse de l'un est alors empêché par l'autre.

Dans l'exemple décrit à la figure 3, les deux interrupteurs d'isolement à transistor 302, 304 sont des transistors MOSFET de Type N connectés par leur source.

De retour à la figure 1, nous allons maintenant expliquer comment fonctionne le convertisseur de tension DC/DC 106.

Ce convertisseur de tension DC/DC 106 comprend un dispositif de commande (non représenté sur la figure) conçu pour dans un premier mode de fonctionnement ouvrir les transistors de sélection TS1, TS2 et fermer les dispositifs de sécurité 126₁, 126₂, 126₃ au moyen de commande CS₁, CS₂, CS₃ afin de réaliser une conversion entre la haute tension HT et la première basse tension BT1.

Dans ce premier mode de fonctionnement, chaque cellule 108₁₋₃ est conçue pour être commandée par des commandes CC₁₋₃ pour alternativement ouvrir et fermer les interrupteurs de côté haut 202 et de côté bas 204, en opposition l'un de l'autre selon un premier rapport cyclique afin de convertir la haute tension HT en la première basse tension BT1.

En outre, les commandes CC₁₋₃ sont émise par le dispositif de commande et elles sont déphasées de T/3 où T est la période du cycle de fonctionnement du convertisseur de tension DC/DC 106. En d'autres termes, le premier rapport cyclique au sein de chacune des cellules 108₁₋₃ est identique mais les commandes des transistors sont déphasées de T/3 d'une cellule à l'autre.

Le dispositif de commande est également conçu pour dans un deuxième mode de fonctionnement fermer les transistors de sélection TS1, TS2 et ouvrir les dispositifs de sécurité 126₂ et 126₃ au moyen de commande CS'₂, CS'₃.

Ainsi, lorsque les dispositifs de sécurité 126₂ et 126₃ sont ouverts, la première borne de basse tension B_{BT1} est déconnectée électriquement des points milieu PM₂ et PM₃.

Dans ce deuxième mode de fonctionnement, les cellules 108₂ et 108₃ sont conçues pour être commandées par des commandes CC'₂₋₃ pour alternativement ouvrir et fermer les interrupteurs de côté haut 202 et de côté bas 204, en opposition l'un de l'autre selon un deuxième rapport cyclique, différent du premier rapport cyclique, afin de convertir la haute tension HT en la deuxième basse tension BT2.

En outre, les commandes CC'₂₋₃ sont émises par le dispositif de commande et elles sont déphasées de T/2 où T est la période du cycle de fonctionnement du convertisseur de tension DC/DC 106. En d'autres termes, le deuxième rapport cyclique au sein de chacune des cellules 108₂ et 108₃ est identique mais les commandes des transistors sont déphasées de T/2 d'une cellule 108₂ à l'autre cellule 108₃.

Dans ce deuxième mode de fonctionnement, la résistance de chauffage R_{PCA} du pot catalytique est alors alimentée par la deuxième basse tension BT2.

Il apparaît clairement qu'un convertisseur de tension DC/DC tel que celui décrit précédemment permet d'alimenter la résistance de chauffage R_{PCA} d'un pot catalytique d'une manière simple et économique.

En d'autres termes, le système électrique 100 met en œuvre un procédé de préchauffage d'un pot catalytique comprenant une étape de préchauffage dans laquelle le dispositif de commande ferme, dans son deuxième mode de fonctionnement, les transistors de sélection TS1, TS2 et ouvre les dispositifs de sécurité 126₂ et 126₃ au moyen de commande CS'₂, CS'₃ afin de réaliser une conversion entre la haute tension HT et la deuxième basse tension BT2 pour alimenter la résistance de chauffage R_{PCA} par ladite deuxième basse tension BT2.

.On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, dans une variante de réalisation, la capacité C₂ peut être connectée entre la borne de masse B_{M} et la deuxième borne de basse tension B_{BT2}. En d'autres termes, dans cette variante de réalisation, le convertisseur de tension DC/DC 106 comprend la capacité C₂.

De même, au lieu d'être des transistors MOSFET, les interrupteurs de sélection TS1, TS2 et/ou les interrupteurs de côté haut 202 et de côté bas 204 et/ou les interrupteurs d'isolement 302 et 304 peuvent être des transistors FET en nitrure de gallium ou des transistors IGBT.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé de préchauffage d'un pot catalytique au moyen d'un système électrique comprenant :
- une masse électrique (M) ;
- un convertisseur de tension DC/DC (106) comprenant :
• une borne de masse (B_{M}) connectée à la masse électrique (M) ;
• une borne de haute tension (B_{HT}) destiné à présenter une haute tension (HT) par rapport à la masse électrique (M) ;
• une première borne de basse tension (B_{BT1}) destiné à présenter une première basse tension (BT1) par rapport à la masse électrique (M) ;
• une deuxième borne de basse tension (B_{BT2}) destiné à présenter une deuxième basse tension (BT2) par rapport à la masse électrique (M) ;
• un nombre N supérieur ou égal à 2 de modules de conversion de tension, connectés en parallèle entre la borne de haute tension (B_{HT}) et la première borne de basse tension (B_{BT1}), chacun des modules de conversion comprenant une cellule de conversion de tension (108₁, 108₂, 108₃) connectée électriquement aux bornes de masse (B_{M}), de haute tension (B_{HT}) et à un point milieu (PM₁, PM₂, PM₃) et un dispositif de sécurité (126₁, 126₂, 126₃) connecté électriquement au point milieu (PM₁, PM₂, PM₃) et à la première borne de basse tension (B_{BT1}) ;
• au plus N-1 modules de conversion de tension comprennent en outre chacun un interrupteur de sélection (TS1, TS2) connecté électriquement entre le point milieu (PM₂, PM₃) du module de conversion de tension et la deuxième borne de basse tension (B_{BT2}) et
• un dispositif de commande conçu pour dans un premier mode de fonctionnement ouvrir tous les interrupteurs de sélection (TS1, TS2) desdits au plus N-1 module de conversion de tension afin de réaliser une conversion entre la haute tension (HT) et la première basse tension (BT1) et pour dans un deuxième mode de fonctionnement, fermer tous les interrupteurs de sélection (TS1, TS2) desdits au plus N-1 module de conversion de tension afin de réaliser une conversion entre la haute tension (HT) et la deuxième basse tension (BT2), et
- une résistance de chauffage (R_{PCA}) dudit pot catalytique, ladite résistance de chauffage (R_{PCA}) étant connectée par l'une de ses bornes à la deuxième borne de basse tension (B_{BT2}) et étant connectée par l'autre de ses bornes à ladite masse électrique (M),
ledit procédé étant **caractérisé en ce qu'**il comprend une étape de préchauffage dans laquelle le dispositif de commande ferme, dans son deuxième mode de fonctionnement, tous les interrupteurs de sélection (TS1, TS2) desdits au plus N-1 module de conversion de tension pour alimenter la résistance de chauffage (R_{PCA}) par ladite deuxième basse tension (BT2) afin de préchauffer ledit pot catalytique.

2. Procédé de préchauffage d'un pot catalytique selon la revendication précédente dans laquelle lors de l'étape de préchauffage le dispositif de sécurité (126₂, 126₃) de chacun desdits au plus N-1 modules de conversion de tension déconnecte électriquement la première borne de basse tension (B_{BT1}) du point milieu (PM₂, PM₃) du module de conversion comprenant ce dispositif de sécurité (126₂, 126₃).

3. Système électrique (100) comprenant :
- un convertisseur de tension DC/DC (106) comportant :
• une borne de masse (B_{M}) destiné à être connecté à une masse électrique (M) ;
• une borne de haute tension (B_{HT}) destiné à présenter une haute tension (HT) par rapport à la masse électrique (M) ;
• une première borne de basse tension (B_{BT1}) destiné à présenter une première basse tension (BT1) par rapport à la masse électrique (M) ;
• une deuxième borne de basse tension (B_{BT2}) destiné à présenter une deuxième basse tension (BT2) par rapport à la masse électrique (M) ;
• un nombre N supérieur ou égal à 2 de modules de conversion de tension, connectés en parallèle entre la borne de haute tension (B_{HT}) et la première borne de basse tension (B_{BT1}), chacun des modules de conversion comprenant une cellule de conversion de tension (108₁, 108₂, 108₃) connectée électriquement aux bornes de masse (B_{M}), de haute tension (B_{HT}) et à un point milieu (PM₁, PM₂, PM₃) et un dispositif de sécurité (126₁, 126₂, 126₃) connecté électriquement au point milieu (PM₁, PM₂, PM₃) et à la première borne de basse tension (B_{BT1}) ;au plus N-1 modules de conversion de tension comprennent en outre chacun un interrupteur de sélection (TS1, TS2) connecté électriquement entre le point milieu (PM₂, PM₃) du module de conversion de tension et la deuxième borne de basse tension (B_{BT2}) et
• un dispositif de commande conçu pour dans un premier mode de fonctionnement ouvrir tous les interrupteurs de sélection (TS1, TS2) desdits au plus N-1 module de conversion de tension afin de réaliser une conversion entre la haute tension (HT) et la première basse tension (BT1) et pour dans un deuxième mode de fonctionnement, fermer tous les interrupteurs de sélection (TS1, TS2) desdits au plus N-1 module de conversion de tension afin de réaliser une conversion entre la haute tension (HT) et la deuxième basse tension (BT2), et
- une résistance de chauffage (R_{PCA}) d'un pot catalytique, ladite résistance de chauffage (R_{PCA}) étant connectée par l'une de ses bornes à la deuxième borne de basse tension (B_{BT2}) et étant destinée à être connectée par l'autre de ses bornes à ladite masse électrique (M).

4. Système électrique (100) selon la revendication précédente, dans lequel dans le deuxième mode de fonctionnement, le dispositif de sécurité (126₂, 126₃) de chacun desdits au plus N-1 modules de conversion de tension déconnecte électriquement la première borne de basse tension (B_{BT1}) du point milieu (PM₂, PM₃) du module de conversion comprenant ce dispositif de sécurité (126₂, 126₃).

5. Système électrique (100) selon la revendication 3 ou 4, dans lequel dans le premier mode de fonctionnement, le dispositif de sécurité (126₁, 126₂, 126₃) de chacun desdits N modules de conversion de tension connecte électriquement la première borne de basse tension (B_{BT1}) au point milieu (PM₁, PM₂, PM₃) du module de conversion comprenant ce dispositif de sécurité (126₁, 126₂, 126₃).

6. Système électrique (100) selon l'une quelconque des revendications 3 à 5, dans lequel chaque cellule de conversion de tension (108₁, 108₂, 108₃) comporte un bras de commutation comportant un interrupteur de côté haut (202) et un interrupteur de côté bas (204) connectés l'un à l'autre en un point central (206), le bras de commutation étant connecté entre la borne de haute tension (B_{HT}) et la borne de masse (B_{M}), tandis que le point central (206) est connecté au point milieu (PM₁, PM₂, PM₃), par exemple par l'intermédiaire d'une inductance (208).

7. Système électrique (100) selon l'une quelconque des revendications 3 à 6, dans lequel la deuxième basse tension (BT2) est plus grande, par exemple au moins deux fois, de préférence au moins trois fois plus grande que la première basse tension (BT1).

8. Système électrique (100) selon l'une quelconque des revendications 3 à 7 dans lequel les interrupteurs de sélection (TS1, TS2) sont des transistors MOSFET ou des transistors FET en nitrure de gallium ou des transistors IGBT.

9. Système électrique (100) selon l'une quelconque des revendications 3 à 8 comprenant en outre ledit pot catalytique.

10. Système électrique (100) selon l'une quelconque des revendications 3 à 9 comprenant en outre une capacité (C₂) connectée par l'une de ses bornes à la deuxième borne de basse tension (B_{BT2}) et destinée à être connectée par l'autre de ses bornes à ladite masse électrique (M).

11. Véhicule automobile comportant un système électrique (100) selon l'une quelconque des revendications 3 à 10.
